# EUROPÄISCHE PATENTSCHRIFT

(11) **EP 1 506 080 B1**
(45) Veröffentlichungstag und Bekanntmachung des Hinweises auf die Patenterteilung: **01.10.2008**
(21) Anmeldenummer: 03720539.0
(22) Anmeldetag: 28.04.2003
(51) Int. Cl.: B29C 45/73, B29C 45/26, B29C 33/04

(54) **FORMWERKZEUG UND VERFAHREN ZUM HERSTELLEN VON KUNSTSTOFFARTIKELN**
FORMING TOOL AND METHOD FOR PRODUCING PLASTIC ARTICLES
MOULE ET PROCEDE DE PRODUCTION D'ARTICLE EN MATIERE PLASTIQUE

(30) Priorität: 15.05.2002 DE 10221558
(43) Veröffentlichungstag der Anmeldung: 16.02.2005
(73) Patentinhaber: KraussMaffei Technologies GmbH, 80997 München (DE)
(72) Erfinder: EICHLSEDER, Martin, 94167 Tettenweis (DE)
(74) Vertreter: Wilhelm, Ludwig
(86) Internationale Anmeldenummer: PCT/EP2003/004420
(87) Internationale Veröffentlichungsnummer: WO 2003/097328

(56) Entgegenhaltungen:
- WO-A-01/38062
- DE-A- 3 017 559
- DE-A- 19 533 045
- PATENT ABSTRACTS OF JAPAN vol. 008, no. 146 (M-307), 7. Juli 1984 (1984-07-07) & JP 59 042934 A (TOKYO SHIBAURA DENKI KK), 9. März 1984 (1984-03-09)
- PATENT ABSTRACTS OF JAPAN vol. 012, no. 302 (M-732), 17. August 1988 (1988-08-17) & JP 63 078720 A (SEKISUI CHEM CO LTD), 8. April 1988 (1988-04-08)
- PATENT ABSTRACTS OF JAPAN vol. 015, no. 120 (M-1096), 25. März 1991 (1991-03-25) & JP 03 010811 A (ASAHI CHEM IND CO LTD), 18. Januar 1991 (1991-01-18)
- PATENT ABSTRACTS OF JAPAN vol. 016, no. 529 (M-1332), 29. Oktober 1992 (1992-10-29) & JP 04 197722 A (JAPAN STEEL WORKS LTD:THE), 17. Juli 1992 (1992-07-17)
- PATENT ABSTRACTS OF JAPAN vol. 1999, no. 08, 30. Juni 1999 (1999-06-30) & JP 11 058474 A (MITSUBISHI ENG PLAST KK), 2. März 1999 (1999-03-02)
- PATENT ABSTRACTS OF JAPAN vol. 2002, no. 08, 5. August 2002 (2002-08-05) & JP 2002 096351 A (HONDA MOTOR CO LTD), 2. April 2002 (2002-04-02)
- PATENT ABSTRACTS OF JAPAN vol. 2002, no. 08, 5. August 2002 (2002-08-05) & JP 2002 096352 A (HONDA MOTOR CO LTD), 2. April 2002 (2002-04-02)
- W. MICHAELI UND A. BRUNSWICK: "Herstellung medienführender Leitungen durch GIT" KUNSTSTOFFE, Bd. 88, Nr. 1, 1988, Seiten 34-39, XP000729798

## Beschreibung

Die Erfindung bezieht sich auf das Spritzgießen von Kunststoffartikeln, bei dem plastifizierter Kunststoff in die Kavität eines Formwerkzeugs eingespritzt wird. Um eine möglichst hohe Oberflächengüte und gute Abformeigenschaften zu erzielen, ist es bekannt, das Formwerkzeug vor und während der Füllphase der Kavität aufzuheizen und in der Kühlphase unter die Entformungstemperatur abzukühlen. Dies erfolgt beispielsweise über einen Fluidkanal, der in einem Formenteil oder in beiden Formenteilen des Formwerkzeugs ausgebildet ist und durch den im Wechsel flüssiges Kühl- und Heizmittel durchgeleitet wird. Diese Verfahrensweise erfordert jedoch lange Zykluszeiten wegen der großen zu temperierenden Massen. Desweiteren steigen die Anforderungen an die Einhaltung von Verfahrensparametern, beispielsweise bei der Abformung von Mikrostrukturen zur Fertigung von CDs, DVDs, beschreibbaren CDs und DVDs und dergleichen.

Aus der DE 19533045 A1 ist ein Formwerkzeug bekannt, bei dem zwei voneinander getrennte Fluidkanäle in einem Formenteil vorgesehen sind. In dem Grundkörper des Formenteils sind in der Nähe der Kavitätenfläche ein Heizkanal und ein davon getrennter Kühlkanal nebeneinander angeordnet, durch die ein Heizmedium bzw. ein Kühlmedium im zeitlichen Wechsel geleitet werden. Durch den wechselweisen Betrieb der Heiz- und der Kühleinrichtung soll die Form rasch auf die jeweils gewünschten Temperaturen gebracht werden, um insgesamt die Zykluszeit zu reduzieren. Die Heizkanäle und die Kühlkanäle sind in einer Ebene nebeneinanderliegend angeordnet. Dies hat mit dem wechselweisen Betrieb den Nachteil, dass in der Kavitätenoberfläche (von links nach rechts in der Figur 2 der DE 19533045 A1) die Temperatur stetig schwankt zwischen Bereichen in unmittelbarer Näher der Kühlkanäle einerseits und Bereichen in unmittelbarer Nähe der Heizkanäle andererseits. Diese Temperaturschwankungen bleiben auch bestehen, wenn die Heizung während der Kühlphase abgeschaltet wird, denn die Wärme kann nicht so schnell abgeführt werden, dass während der Kühlphase in den Bereichen der Heizkanäle die gleiche Temperatur erreicht wird wie in den Bereichen der Kühlkanäle. Dies gilt auch im umgekehrten Fall des Aufheizens während die Kühleinrichtung abgeschaltet ist. Der hierdurch verursachte inhomogene Temperaturverlauf in der Kavitätenoberfläche wirkt sich nachteilig auf die Qualität der Kunststoffartikel aus. Dies gilt insbesondere beim Abformen der Mikrostrukturen von CD- und DVD-Substraten. Ein weiterer Nachteil des Formenteils gemäß der DE 19533045 A1 ergibt sich durch den Zwang, die Heizung während des Kühlvorgangs abzuschalten, denn dadurch dauert es nach der Formteilentnahme länger, bis die Kavitätenfläche wieder auf die ursprüngliche Ausgangstemperatur zu Beginn des Einspritzens aufgeheizt ist.

Aus der DE-A-3016559 ist ein Formwerkzeug bekannt, bei dem kavitätennahe Kühlkanäle mit einem vergleichsweise großen Querschnitt und großem Abstand zueinander zum Durchleiten eines Kühlfluids und davon beabstandet kavitätenferne Heizkanäle mit demgegenüber kleinerem Querschnitt und mit eingelegten Heizdrähten zum Beheizen des Formwerkzeugs vorgesehen sind.

Aus der JP-A-3018011 ist ein Formwerkzeug mit einem magnetischen Bereich und einem nichtmagnetischen Bereich bekannt, wobei der magnetische Bereich durch Hochfrequenzinduktion beheizbar ist und wobei in dem nichtmagnetischen Bereich Kanäle für ein flüssiges Kühlmedium vorgesehen sind.

Aus der JP-A-59042934 ist eine Hälfte eines Formwerkzeugs bekannt, in der kavitätenferne Kanäle zur Aufnahme eines Kühl- oder Heizfluids sowie ein kavitätennaher, flacher, zylindrischer Raum mit einer Vielzahl von Nuten in den sich gegenüberliegenden Flächen des Zylinders zur Aufnahme eines weiteren Kühlfluids vorgesehen sind.

Aus dem Dokument "Herstellung mediengeführter Leitungen durch GIT", W. Michaeli und A. Brunswick, Kunststoffe 88, 1998, 1, Seiten 34-36 und 39, ist ein Formwerkzeug bekannt, bei dem kavitätennahe Kühlkanäle mit einem vergleichsweise kleinen Querschnitt und großem Abstand zueinander zum Durchleiten eines Kühlfluids und davon beabstandet kavitätenferne Heizkanäle mit demgegenüber größerem Querschnitt zur Durchleitung von Öl als Heizfluid oder zur Aufnahme einer elektrischen Heizschlange vorgesehen sind.

Ausgehend hiervon liegt der Erfindung die Aufgabe zugrunde, beim Spritzgießen von Kunststoffartikeln eine hohe Oberflächengüte und eine gute Abformbarkeit mit gleichzeitig kurzer Zyklusdauer zu erzielen und ein hierfür geeignetes Formenteil sowie ein hierfür geeignetes Herstellungsverfahren anzugeben.

Die Lösung dieser Aufgabe erfolgt mittels eines Formwerkzeugs mit einem Formenteil nach Anspruch 1 bzw. durch ein Verfahren gemäß dem nebengeordneten Anspruch 10. Die abhängigen Ansprüche betreffen vorteilhafte Weiterentwicklungen der Erfindung.

Bei einem Formenteil mit mindestens einem Heizkanal und mindestens einem davon getrennten Kühlkanal, wobei der Kühlkanal näher an der Kavitätenfläche des Formenteils, an der die Oberfläche des Kunststoffartikels ausgebildet wird, liegt als der Heizkanal, wird erfingdungsgemäß vorgeschlagen, die Länge L_{K} der Stege zwischen den Kühlkanälen kleiner oder gleich groß auszubilden wie den Abstand A zwischen den Kühlkanälen und der Kavitätenoberfläche. Es werden also zwei Temperierebenen gebildet, nämlich eine kavitätennahe Kühlebene und eine kavitätenferne Heizebene, wobei in der Kühlebene die Länge L_{K} der Stege zwischen den Kühlkanälen kleiner oder gleich groß ist wie der Abstand A zwischen den Kühlkanälen und der Kavitätenoberfläche . Dadurch kann in einer Kühlphase das Kunststoffmaterial effektiv abgekühlt werden, wobei der Kühlkanal als Barriere zum Heizkanal wirkt. Dies kann beispielsweise noch dadurch unterstützt werden, dass der Kühlkanal auf Seiten des Heizkanals thermisch gegen den Heizkanal isoliert ist. Der Heizkanal kann während der Kühlphase weiterbetrieben werden, so dass zum Ende der Kühlphase nur der kavitätennahe Bereich des Formenteils neu aufgeheizt werden muss.

Andererseits kann der Kühlkanal in einer Heizphase auch zur Wärmeübertragung dienen. Da er sehr nahe an der Oberfläche angeordnet sein kann, kann er relativ klein dimensioniert sein, so dass sich das im Kühlkanal befindliche Kühlmedium - wenn es nicht umgewälzt wird - schnell erwärmt und zur Übertragung von Wärmeenergie in Richtung der Kavitätenfläche verwendet werden kann.

Wegen der kleinen Dimensionierung des Kühlkanals kann er in engen Abständen mäandernd in einer Ebene parallel und sehr nahe zur Kavitätenfläche verlaufen, oder es können mehrere Kühlkanäle mit geringen Abständen untereinander vorgesehen sein.

Bei der Herstellung von CD- oder DVD-Substraten hat es sich als günstig erwiesen, wenn die Länge L_{K} der Stege zwischen benachbarten Kühlkanälen in etwa dem Abstand A zwischen den Kühlkanälen und der Kavitätenfläche entspricht oder kleiner ist als dieser. Dann wird eine gute Barrierewirkung erzielt, wie dies weiter unten bei der Beschreibung des Ausführungsbeispiels näher erläutert ist. Ausserdem haben sich günstige Ergebnisse ergeben, wenn die Länge L_{K} der Stege zwischen benachbarten Kühlkanälen kleiner ist als die Länge L_{H} der Stege zwischen benachbarten Heizkanälen.

Wenn das Kühlmedium mit einer hohen Durchflußrate durch die Kühlkanäle geleitet wird, zum Beispiel mittels einer genügend starken Pumpe, braucht die Temperatur des Kühlmediums nicht wesentlich unter der Entformungstemperatur zu liegen. Vielmehr wird durch den hohen Durchsatz an Kühlmedium die Wärme rasch abtransportiert.

Wegen des relativ größeren Abstandes des Heizkanals von der Formungsoberfläche wird beim Einspritzen eine gleichmäßige Temperatur der Formungsfläche erzielt.

Der Heizkanal bzw. der Kühlkanal sind vorzugsweise zum Durchleiten von fluiden Heiz- bzw. Kühlmitteln ausgestaltet. Jedoch ist es auch möglich, beispielsweise in den Heizkanal Heizelemente wie Widerstandselemente oder dergleichen einzubringen. Desweiteren kann der Heizkanal bzw. der Kühlkanal als Einzelkanal, das heißt als Heiz- bzw. Kühlschlange ausgebildet sein oder aus mehreren Einzelkanälen bestehen, die gleichsinning oder gegensinnig von Heiz- bzw. Kühlmittel durchflossen werden.

Ein erfindungsgemäßes Verfahren zum Herstellen von Kunststoffartikeln schlägt einen zweistufigen Kühlprozeß vor. In der Phase eins (1. Stufe) liegt die Temperatur der Kavitätenfläche über der Entformungstemperatur, jedoch unterhalb der Schmelzetemperatur. In dieser ersten Phase wird vor dem Einspritzen von Kunststoffmaterial zumindest eine Kavitätenoberfläche des Formwerkzeugs mit einer Heizeinrichtung auf die gewünschte Temperatur aufgeheizt, indem ein Heizmedium, beispielsweise heißes Wasser, durch die kavitätenfernen Heizkanäle geleitet wird. In der Phase zwei (2. Stufe) liegt die Temperatur der Kavitätenfläche unterhalb der Entformungstemperatur. Mit dem Ende der Einspritzens wird die Kavitätenoberfläche mittels einer Kühleinrichtung impulsartig schnell unter die Entformungstemperatur abgekühlt, indem das Kühlmedium durch die kavitätennahen Kühlkanäle geleitet wird. Sobald die Entformungstemperatur erreicht oder unterschritten ist, kann der fertige Kunststoffartikel entnommen werden. Auf diese Weise kann eine hohe Werkzeugtemperatur beim Einspritzen und somit eine gute Werkzeuginnendruckverteilung bei kurzer Zykluszeit sichergestellt werden.

In vorteilhafter Ausgestaltung wird hinter den Kühlkanälen das Werkzeug stets beheizt. Lediglich für die kurze Phase des Kühlens wird zusätzlich ein Kühlmedium, zum Beispiel Wasser, mit einem hohen Durchsatz durch die Kühlkanäle geleitet und die Kavitätenfläche impulsartig gekühlt. Dies hat den Vorteil, dass nach dem Kühlimpuls die volle Wärmeenergie, die im Werkzeug gespeichert ist, flächig hinter den Kühlkanälen ansteht und rasch zu der Kavitätenoberfläche gelangen und diese innerhalb kurzer Zeit wieder auf die Einspritztemperatur aufheizen kann. Hierbei kann gegebenenfalls vor dem Aufheizen Kühlmittel aus dem Kühlkanal abgesaugt werden, so dass in dieser Phase kein Kühlmittel aufgeheizt wird.

Das Verfahren gemäß Anspruch 14 hat den Vorteil, dass das Kühlmittel während der Heizphase nicht aufgeheizt wird, so dass zu Beginn der Kühlphase nicht zunächst aufgeheiztes Kühlmedium abgeführt werden muss.

Je nach herzustellendem Artikel ist es auch möglich, dass der Heiz- und der Kühlkreislauf mit derselben Temperatur nahe unter der Entformungstemperatur betrieben werden und zum Wärmeabtransport der Kühlkreislauf in der Kühlphase dazugeschaltet wird (Ansprüche 15 und 16).

Bei sehr kurzen Spritzgießzyklen kann gemäß Anspruch 17 der Kühlkreislauf kontinuierlich betrieben werden (d.h. zusätzlich zum kontinuierlich betriebenen Heizkreislauf). In der Spritz- und einem Teil der Kühlphase wird der Kühlkreislauf zusätzlich durch die heiße eingespritzte Kunststoffschmelze aufgeheizt. Dadurch, dass der Kühlkanal von zwei Seiten quasi aufgeheizt wird und Temperatur abführen muss, entsteht eine vergleichsweise weiche Abkühlkurve, die das Schrumpfverhalten des Artikels positiv beeinflussen kann.

Wenn die Kavitätenoberflächen in den beiden Formenteilen unterschiedliche Strukturen aufweisen, die es abzuformen gilt, kann gemäß den Ansprüchen 18 und 19 vorgesehen werden, dass die Heiz- und Kühlleistung an diese unterschiedlichen Gegebenenheiten angepasst werden.

Ein Ausführungsbeispiel der Erfindung wird anhand der beigefügten Zeichnung erläutert.
- Fig. 1: zeigt einen partiellen Schnitt durch ein geschlossenes Formwerkzeug,
- Fig. 2: zeigt einen partiellen Schnitt durch einen Formteil, und
- Fig. 3: zeigt schematisch die Kreisläufe für das Heiz- und das Kühlmedium.

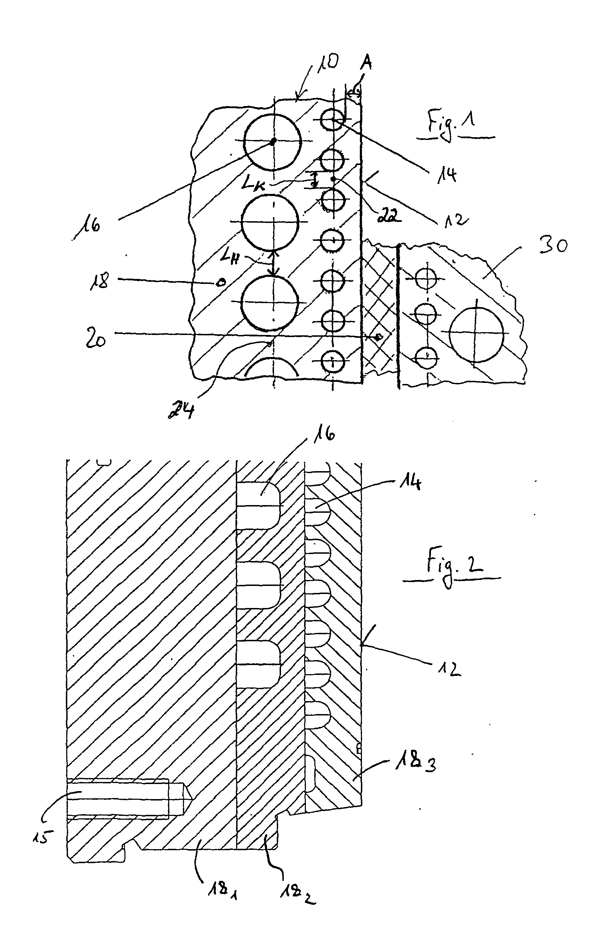

In Fig. 1 bezeichnet die Bezugsziffer 10 einen Formenteil für ein Formwerkzeug zur Herstellung von Kunststoffartikeln mit einem Grundkörper 18 und einer Kavitätenoberfläche 12. In der Nähe der Kavitätenoberfläche 12 sind parallel verlaufende Kühlkanäle 14 ausgebildet, die jeweils durch einen Steg 22 der Länge L_{K} voneinander beabstandet sind. Der Abstand der Kühlkanäle 14 zur Kavitätenoberfläche 12 soll mit A bezeichnet werden. Parallel zu den Kühlkanälen 14 und dahinterliegend verlaufen Heizkanäle 16, die jeweils durch einen Steg 24 der Länge L_{H} voneinander beabstandet sind. Die Heizkanäle 16 weisen einen deutlich größeren Querschnitt auf als die Kühlkanäle 14. Das erfindungsgemäße Formenteil weist also einerseits kavitätennahe Kühlkanäle (14) und andererseits kavitätenfeme Heizkanäle (16) auf. Mit den Begriffen "kavitätennah" und "kavitätenferm" ist keine Einschränkung hinsichtlich des Abstandes der Kühlkanäle (14) und der Heizkanäle (16) zu der Kavitätenfläche (12) verbunden, sondern es soll lediglich die relative Lage der Kühlkanäle (14) zu den Heizkanälen (16) kurz und prägnant ausgedrückt werden.

Das Formenteil 10 bildet zusammen mit einem Formenteil 30, das den gleichen Aufbau wie das Formenteil 10 haben kann, eine geschlossene Kavität, in die Kunststoffmaterial 20 eingespritzt wird.

Im Betrieb wird ein Heiz- bzw. ein Kühlmittel wie Wasser oder Öl durch die Kanäle 14, 16 geleitet, wobei das Kühlmedium vorzugsweise mit einer Verdrängerpumpe, z. B. Zahnradpumpe, gepumpt wird, um einen hohen Wirkungsgrad zu erzielen. Der Kühlkanal kann gegebenenfalls auch grundsätzlich in an sich bekannter Weise im Wechsel zum Heizen und Kühlen verwendet werden, wobei sich der Vorteil ergibt, dass nur kleine Massen aufzuheizen sind.

Vorzugsweise wird der erfindungsgemäße Formenteil in einem zweistufigen Kühlprozeß verwendet. In der Kühlphase wirkt dabei der Kühlkanal als Barriere zur Kavität und verhindert ein Aufheizen der Kavität. Da der restliche Grundkörper des Formenteils, der vom Kühlkanal entfernt liegt, nach dem Abschalten des Kühlens eine hohe Temperatur hat, wirkt dieser wie ein Wärmespeicher und erwärmt dadurch die Kavität schnell.

Nach dem Entformen wird der Kühlkanal abeschaltet und die Kavität wird durch den Heizkanal bis zum nächsten Zyklus wieder aufgeheizt.

Unter Berücksichtigung der Wärmeleitfähigkeit des Formenteils und des Kühlkanalabstandes zur Kavitätenoberfläche, insbesondere unter Berücksichtigung der oben genannten Abmessungen L_{K}, L_{H} und A, kann die Kühlung bereits vor dem Entformen abgeschaltet werden. Optimal ist es, wenn der Abschaltzeitpunkt der Kühlung so gewählt wird, dass genau beim Entformen des Artikels die Entformungstemperatur in der Kavität vorliegt und unmittelbar nach dem Entformen die Kavitätenoberfläche wieder aufgeheizt wird. Das Aufheizen kann dabei schon gestartet werden, wenn der Entnahmeroboter den geformten Artikel gerade entnommen hat und das Werkzeug noch offen steht.

Höhere Kavitätentemperaturen beim Einspritzen führen zu geringerem Spritzdruck, weniger Schließkraft, gleichmäßigem Werkzeuginnendruck, besserer Abformung, höherem Oberflächenglanz und weniger Spannungen im hergestellten Kunststoffartikel.

Da durch die Zweistufen-Kühlung in der Spritzphase immer eine höhere Kavitätentemperatur als in der Kühlphase vorhanden ist , und zwar über die gesamte Kavitätenoberfläche gleichmäßig verteilt, wird im Vergleich zu bekannten Techniken bei gleichbleibender Artikelqualität eine kürzere Kühlzeit erzielt, was zu einer kürzeren Zykluszeit führt.

Grundsätzlich kann durch die hohe Kavitätentemperatur eine sehr hohe Artikelqualität erreicht werden, da die eingespritzte Masse länger flüssig bleibt und somit auch angußfern noch eine gute Abformung der Kavität möglich ist. Insbesondere bei der Herstellung von CD- und DVD-Substraten ergibt sich eine gute Abformung der Mikrostrukturen.

Ein weiterer Vorteil ist, daß dadurch auch sehr dünnwandige Teile hergestellt werden können. Ein Anwendungsfall könnte beispielsweise eine Datenspeicherplatte vom Typ BLUE-RAY-disc sein, bei der als Deckschicht eine 100 µm dicke Folie gespritzt werden soll.

Während in Fig. 1 die Formteile 10, 30 mit massiven Grundkörpern 18 dargestellt sind, in die die Heiz- und Kühlkanäle 14, 18 als Bohrungen eingebracht sind, zeigt Fig. 2 einen Schichtaufbau eines Formenteils. Dieser Formenteil ist zusammengesetzt aus einer Grundplatte 18₁, einer Heizplatte 18₂ und einer Kühlplatte 18₃. Bei diesem Aufbau sind die Heiz- und Kühlkanäle 14, 16 als Ausnehmungen mit beispielsweise U-förmigem oder halbkreisförmigem Querschnitt in den jeweiligen Platten ausgebildet, beispielsweise durch Aufeinanderschichten der Platten in der dargestellten Reihenfolge. Durch Fixieren der Platten aneinander durch geeignete Befestigungsmittel werden die Heizkanäle 16 durch die Grundplatte 18₁ verschlossen und die Kühlkanäle 14 der Kühlplatte 18₃ durch die Oberfläche der Heizplatte 18₂. Dabei bildet die den Kühlkanälen 14 abgewandte Seite der Kühlplatte 18₃ die Kavitätenoberfläche, und der Grundkörper 18₁ trägt beispielsweise Befestigungsmittel 15 zum Befestigen des Formteils an einer Formaufspannplatte oder dergleichen.

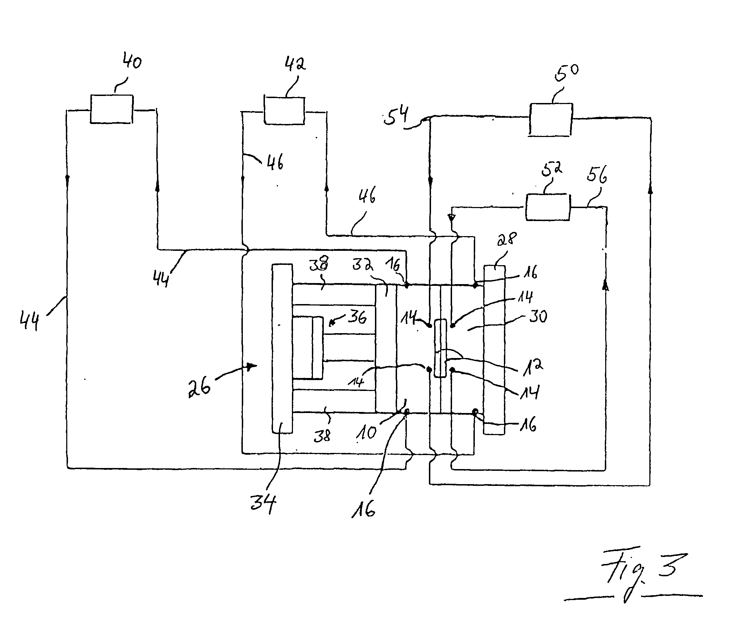

In der Figur 3 ist schematisch die Schließeinheit 26 einer an sich bekannten Spritzgießmaschine dargestellt, die eine feststehende Werkzeugaufspannplatte 28 zur Aufnahme des festen Formenteils 30, eine bewegliche Werkzeugaufspannplatte 32 zur Aufnahme des beweglichen Formenteils 10 sowie eine Abstützplatte 34 aufweist. An der Abstützplatte 34 ist ein Antriebsmechanismus 36 vorgesehen, mit dem die bewegliche Werkzeugaufspannplatte 32 an Holmen 38 geführt hin- und herbewegt werden kann. An das Heizkanalsystem 16 in dem beweglichen Formenteil 10 ist ein erster Heizmediumkreislauf 44 mit einer ersten Einrichtung 40 zum Erhitzen und Umwälzen eines Heizmediums angeschlossen. In analoger Weise ist ein zweiter Heizmediümkreislauf 46 mit einer zweiten Einrichtung 42 zum Erhitzen und Umwälzen eines Heizmediums an das Heizkanalsystem 16 in dem feststehenden Formenteil 30 angeschlossen. An die in der Nähe der Kavitätenflächen 12 verlaufenden Kühlkanäle 14 sind Kühlmediumkreisläufe 54 und 56 mit Einrichtungen 50 und 52 zum Kühlen und Umwälzen des Kühlmediums angeschlossen. Der besseren Übersicht halber sind die Kühlkanäle 14 und die Heizkanäle 16, die im Innern der beiden Formenteile 10 und 30 verlaufen, nicht dargestellt.

### Bezugszeichenliste

| | |
|---|---|
| 10 | Erstes Formenteil |
| 12 | Kavitätenoberfläche |
| 14 | Kühlkanal |
| 15 | Befestigungsmittel |
| 16 | Heizkanal |
| 18 | Grundkörper |
| 18₁ | Grundplatte |
| 18₂ | Heizplatte |
| 18₃ | Kühlplatte |
| 20 | Kunststoffartikel |
| 22 | Steg zwischen Kühlkanälen |
| 24 | Steg zwischen Heizkanälen |
| 26 | Schließeinheit |
| 28 | Feststehende Werkzeugaufspannplatte |
| 30 | Zweites Formenteil |
| 32 | Bewegliche Werkzeugaufspannplatte |
| 34 | Abstützplatte |
| 36 | Antrieb |
| 38 | Holme |
| 40 | Erste Einrichtung zum Heizen und Umwälzen des Heizmediums |
| 42 | Zweite Einrichtung zum Heizen und Umwälzen des Heizmediums |
| 44 | Erster Heizmediumkreislauf |
| 46 | Zweiter Heizmediumkreislauf |
| 50 | Erste Einrichtung zum Kühlen und Umwälzen des Kühlmediums |
| 52 | Zweite Einrichtung zum Kühlen und Umwälzen des Kühlmediums |
| 54 | Erster Kühlmediumkreislauf |
| 56 | Zweiter Kühlmediumkreislauf |

## Patentansprüche

1. Formenteil (10 oder 30) eines Formwerkzeugs zur Herstellung von Kunststoffartikeln (20) mit einem Grundkörper (18), der eine Kavitätenfläche (12) aufweist, wobei im Grundkörper (18) mindestens ein Heizkanal (16) und mindestens ein vom Heizkanal (16) getrennter Kühlkanal ausgebildet sind, und wobei der Kühlkanal näher an der Kavitätenfläche (12) angeordnet ist als der Heizkanal (16), **dadurch gekennzeichnet, dass** in der Nähe der Kavitätenfläche (12) benachbarte Kühlkanäle (14) ausgebildet sind die durch einen Steg (22) voneinander beabstandet sind, wobei die Länge L_{K} der Stege (22) zwischen den benachbarten Kühlkanälen (14) kleiner oder gleich groß ist als der Abstand A zwischen den Kühlkanälen (14) und der Kavitätenfläche.

2. Formenteil nach Anspruch 1, **dadurch gekennzeichnet, dass** der Kühlkanal (14) in Richtung auf den Heizkanal (16) thermisch isoliert ist.

3. Formenteil nach Anspruch 1 oder 2, **dadurch gekennzeichnet, dass** der Kühlkanal (14) einen geringeren Querschnitt aufweist als der Heizkanal (16)

4. Formenteil nach einem der Ansprüche 1 bis 3, **dadurch gekennzeichnet, dass** der Grundkörper einen Schichtaufbau aufweist mit einer Grundplatte (18₁), einer Heizplatte (18₂), die den Heizkanal (16) aufweist, und einer Kühlplatte (18₃), die den Kühlkanal (14) aufweist.

5. Formenteil nach Anspruch 3, **dadurch gekennzeichnet, dass** der Heizkanal (16) von einer Oberfläche der Grundplatte (18₁) begrenzt wird und der Kühlkanal (14) von einer Oberfläche der Heizplatte (18₂).

6. Formenteil nach einem der Ansprüche 1 bis 5, **dadurch gekennzeichnet, dass** die Länge L_{K} der Stege (22) zwischen den Kühlkanälen (14) kleiner ist als die Länge L_{H} der Stege (24) zwischen den Heizkanälen (16).

7. Formenteil nach einem der Ansprüche 1 bis 6, **dadurch gekennzeichnet, dass** der oder die Kühlkanäle (14) in einer ersten, parallel zur Kavitätenfläche (12) liegenden Ebene angeordnet sind, dass der oder die Heizkanäle (16) in einer zweiten Ebene angeordnet sind, die parallel zu der ersten Ebene liegt, und dass die erste Ebene näher zur Kavitätenfläche (12) liegt als die zweite Ebene.

8. Formwerkzeug mit mindestens einem Formenteil nach einem der Ansprüche 1 bis 7.

9. Spritzgießmaschine mit einem Formwerkzeug nach Anspruch 8 sowie mit einer Einrichtung zum Erhitzen und Umwälzen eines Heizmediums (Heizeinrichtung) sowie mit einer Einrichtung zum Kühlen und Umwälzen eines Kühlmediums (Kühleinrichtung).

10. Verfahren zum Herstellen von Kunststoff-Formteilen mit einer Spritzgießmaschine nach Anspruch 9.

11. Verfahren nach Anspruch 10 mit den Schritten:
a) Aufheizen der Formkavität des Formwerkzeugs auf eine Temperatur oberhalb der Entformungstemperatur des zu verarbeitenden Kunststoffs, indem das Heizmedium durch die kavitätenfernen Heizkanäle geleitet wird,
b) Starten des Einspritzens von Kunststoff,
c) Beenden des Einspritzens und gleichzeitig Starten des Kühlens, indem das Kühlmedium durch die kavitätennahen Kühlkanäle geleitet wird,
d) Beenden des Kühlens vor oder bei Erreichen der Entformungstemperatur,
e) Entnehmen des Kunststoffteils und Starten des Aufheizens,
wobei in den Schritten b) bis d) die Heizeinrichtung weiterbetrieben oder abgeschaltet wird.

12. Verfahren nach Anspruch 10 mit den Schritten:
a) Aufheizen der Formkavität des Formwerkzeugs auf eine Temperatur oberhalb der Entformungstemperatur des zu verarbeitenden Kunststoffs, indem das Heizmedium durch die kavitätenfernen Heizkanäle geleitet wird,
b) Starten des Einspritzens von Kunststoff und Absenken der Temperatur der Heizeinrichtung,
c) Beenden des Einspritzens und gleichzeitig Starten des Kühlens mit der Kühleinrichtung, indem das Kühlmedium durch die kavitätennahen Kühlkanäle geleitet wird,
d) Beenden des Kühlens vor oder bei Erreichen der Entformungstemperatur und Erhöhung der Temperatur der Heizeinrichtung,
e) Entnehmen des Kunststoffteils und Starten des Aufheizens.

13. Verfahren nach Anspruch 11 oder 12, **dadurch gekennzeichnet, dass** im Schritt d) das Kühlmedium abgesaugt wird.

14. Verfahren nach Anspruch 10 mit den Schritten:
a) Aufheizen der Formkavität des Formwerkzeugs auf eine Temperatur oberhalb der Entformungstemperatur des zu verarbeitenden Kunststoffs, indem das Heizmedium durch die kavitätenfernen Heizkanäle geleitet wird,
b) Starten des Einspritzens von Kunststoff,
c) Beenden des Einspritzens und gleichzeitig Starten des Kühlens mit der Kühleinrichtung, indem das Kühlmedium durch die kavitätennahen Kühlkanäle geleitet wird,
d) Beenden des Kühlens vor oder bei Erreichen der Entformungstemperatur,
e) Entnehmen des Kunststoffteils und Starten des Aufheizens,
wobei im Schritt d) das Kühlmedium abgesaugt wird.

15. Verfahren nach Anspruch 10 mit den Schritten:
a) Aufheizen der Formkavität des Formwerkzeugs auf eine Temperatur nahe unter der Entformungstemperatur des zu verarbeitenden Kunststoffs, indem das Heizmedium durch die kavitätenfernen Heizkanäle geleitet wird,
b) Starten des Einspritzens von Kunststoff,
c) Beenden des Einspritzens und gleichzeitig Starten des Kühlens mit der Kühleinrichtung, indem das Kühlmedium mit einer Temperatur nahe unter der Entformungstemperatur des zu verarbeitenden Kunststoffes durch die kavitätennahen Kühlkanäle geleitet wird,
d) Beenden des Kühlens vor oder bei Erreichen der Entformungstemperatur,
e) Entnehmen des Kunststoffteils und Starten des Aufheizens.

16. Verfahren nach Anspruch 15, **dadurch gekennzeichnet, dass** die Heizrichtung und die Kühleinrichtung mit der gleichen Temperatur betrieben werden.

17. Verfahren nach Anspruch 10, insbesondere für sehr kurze Zyklen, mit den Schritten:
a) Betreiben der Heizeinrichtung, indem das Heizmedium durch die kavitätenfernen Heizkanäle geleitet wird und Betreiben der Kühleinrichtung, indem das Kühlmedium durch die kavitätennahen Kühlkanäle geleitet wird,
b) Starten des Einspritzens von Kunststoff,
c) Beenden des Einspritzens,
d) Abkühlenlassen des Kunststoffteils,
e) Entnehmen des Kunststoffteils.

18. Verfahren nach einem der Ansprüche 10 bis 17, **dadurch gekennzeichnet, dass** die Hälften des Formwerkzeugs im Schritt a) auf unterschiedliche Temperaturen aufgeheizt werden.

19. Verfahren nach einem der Ansprüche 10 bis 18, **dadurch gekennzeichnet, dass** die Hälften des Formwerkzeugs im Schritt c) auf unterschiedliche Temperaturen abgekühlt werden.

20. Verfahren nach einem der Ansprüche 10 bis 19, **dadurch gekennzeichnet, dass** die Kühleinrichtung in den Schritten a), b) und d) mit einer höheren Temperatur betrieben wird als im Schritt c).

## Claims

1. A mould portion (10 or 30) of a moulding tool for the production of plastic articles (20) with a base body (18) which has a cavity surface (12), in which in the base body (18) at least one heating channel (16) and at least one cooling channel which is separated from the heating channel (16) are formed, and in which the cooling channel is arranged closer to the cavity surface (12) than the heating channel (16), **characterized in that** in the vicinity of the cavity surface (12) adjacent cooling channels (14) are formed, which are spaced apart from each other by a web (22), in which the length L_{K} of the webs (22) between the adjacent cooling channels (14) is smaller than or equal to the distance A between the cooling channels (14) and the cavity surface.

2. The mould portion according to Claim 1,
**characterized in that** the cooling channel (14) is thermally insulated in the direction of the heating channel (16).

3. The mould portion according to Claim 1 or 2, **characterized in that** the cooling channel (14) has a smaller cross-section than the heating channel (16).

4. The mould portion according to any of Claims 1 to 3, **characterized in that** the base body has a laminated construction with a base plate (18₁), a heating plate (18₂) which has the heating channel (16), and a cooling plate (18₃) which has the cooling channel (14).

5. The mould portion according to Claim 3,
**characterized in that** the heating channel (16) is bounded by a surface of the base plate (18₁) and the cooling channel (14) is bounded by a surface of the heating plate (18₂).

6. The mould portion according to any of Claims 1 to 5, **characterized in that** the length Lₓ of the webs (22) between the cooling channels (14) is smaller than the length L_{H} of the webs (24) between the heating channels (16).

7. The mould portion according to any of Claims 1 to 6, **characterized in that** the cooling channel or channels (14) are arranged in a first plane lying parallel to the cavity surface (12), that the heating channel or channels (16) are arranged in a second plane which lies parallel to the first plane, and that the first plane lies closer to the cavity surface (12) than the second plane.

8. A moulding tool with at least one mould portion according to any of Claims 1 to 7.

9. An injection moulding machine with a moulding tool according to Claim 8 and with an arrangement for heating and circulating a heating medium (heating arrangement) and with an arrangement for cooling and circulating a coolant (cooling arrangement).

10. A method for the production of plastic shaped parts with an injection moulding machine according to Claim 9.

11. The method according to Claim 10 with the steps:
a) heating up the mould cavity of the moulding tool to a temperature above the mould-opening temperature of the plastic which is to be processed, by the heating medium being directed through the heating channels at a distance away from the cavity,
b) starting the injection of plastic,
c) ending the injection and simultaneous starting of cooling, by the coolant being directed through the cooling channels close to the cavity,
d) ending the cooling before or on reaching the mould-opening temperature,
in which in steps b) to d) the heating arrangement continues to be operated or is switched off.

12. The method according to Claim 10 with the steps:
a) heating up the mould cavity of the moulding tool to a temperature above the mould-opening temperature of the plastic which is to be processed, by the heating medium being directed through the heating channels at a distance away from the cavity,
b) starting the injection of plastic and lowering the temperature of the heating arrangement,
c) ending the injection and simultaneously starting the cooling with the cooling arrangement, by the coolant being directed through the cooling channels close to the cavity,
d) ending the cooling before or on reaching the mould-opening temperature and raising the temperature of the heating arrangement,
e) removal of the plastic part and starting the heating up.

13. The method according to Claim 11 or 12,
**characterized in that** in step d) the coolant is sucked off.

14. The method according to Claim 10 with the steps:
a) heating up the mould cavity of the moulding tool to a temperature above the mould-opening temperature of the plastic which is to be processed, by the heating medium being directed through the heating channels at a distance from the cavity,
b) starting the injection of plastic,
c) ending the injection and simultaneously starting the cooling with the cooling arrangement, by the coolant being directed through the cooling channels close to the cavity,
d) ending the cooling before or on reaching the mould-opening temperature,
e) removal of the plastic part and starting the heating up,
in which in step d) the coolant is sucked off.

15. The method according to Claim 10 with the steps:
a) heating up the mould cavity of the moulding tool to a temperature close to below the mould-opening temperature of the plastic which is to be processed, by the heating medium being directed through the heating channels at a distance away from the cavity,
b) starting the injection of plastic,
c) ending the injection and simultaneous starting of the cooling with the cooling arrangement, by the coolant being directed through the cooling channels close to the cavity at a temperature close to below the mould-opening temperature of the plastic which is to be processed,
d) ending the cooling before or on reaching the mould-opening temperature,
e) removal of the plastic part and starting the heating up.

16. The method according to Claim 15, **characterized in that** the heating arrangement and the cooling arrangement are operated at the same temperature.

17. The method according to Claim 10, in particular for very short cycles, with the steps:
a) operating the heating arrangement, by the heating medium being directed through the heating channels at a distance away from the cavity, and operating the cooling arrangement, by the coolant being directed through the cooling channels close to the cavity,
b) starting the injection of plastic,
c) ending the injection,
d) allowing the plastic part to cool down,
e) removal of the plastic part.

18. The method according to any of Claims 10 to 17, **characterized in that** the halves of the moulding tool are heated up to different temperatures in step a).

19. The method according to any of Claims 10 to 18, **characterized in that** the halves of the moulding tool are cooled down to different temperatures in step c).

20. The method according to any of Claims 10 to 19, **characterized in that** the cooling arrangement is operated at a higher temperature in steps a), b) and d) than in step c).

## Revendications

1. Elément de moule (10 ou 30) d'un outil de formage pour la fabrication d'articles en matière plastique (20) avec un corps de base (18), comportant une surface avec des cavités (12), au moins un conduit de chauffage (16) et au moins un conduit de refroidissement séparé du conduit de chauffage (16) étant réalisés dans le corps de base (18) et le corps de base (12) étant disposé plus près de la surface avec des cavités (12) que le conduit de chauffage (16), **caractérisé en ce qu'**à proximité de la surface avec des cavités (12) sont réalisés des conduits de refroidissement (14) voisins, écartés les uns des autres par un listel (22), la longueur L_{K} des listels (22) entre les conduits de refroidissement (14) voisins étant inférieure ou égale à l'écart A entre les conduits de refroidissement (14) et la surface avec des cavités.

2. Elément de moule selon la revendication 1, **caractérisé en ce que** le conduit de refroidissement (14) est thermiquement isolé en direction du conduit de chauffage (16).

3. Elément de moule selon la revendication 1 ou 2, **caractérisé en ce que** le conduit de refroidissement (14) présente une section transversale plus réduite que celle du conduit de chauffage (16).

4. Elément de moule selon l'une quelconque des revendications 1 à 3, **caractérisé en ce que** le corps de base comporte une structure stratifiée avec une plaque de base (18₁), une plaque chauffante (18₂) comportant le conduit de chauffage (16) et une plaque de refroidissement (18₃) comportant le conduit de refroidissement (14).

5. Elément de moule selon la revendication 3, **caractérisé en ce que** le conduit de chauffage (16) est limité par une surface de la plaque de base (18₁) et le conduit de refroidissement (14) est limité par une surface de la plaque chauffante (18₂).

6. Elément de moule selon l'une quelconque des revendications 1 à 5, **caractérisé en ce que** la longueur L_{K} des listels (22) entre les conduits de refroidissement (14) est inférieure à la longueur LH des listels (24) entre les conduits de chauffage (16).

7. Elément de moule selon l'une quelconque des revendications 1 à 6, **caractérisé en ce que** le ou les conduits de refroidissement (14) sont disposés dans un premier plan situé à la parallèle de la surface avec des cavités (12), **en ce que** le ou les conduits de chauffage (16) sont disposés dans un deuxième plan situé à la parallèle du premier plan et **en ce que** le premier plan est situé plus près de la surface avec des cavités (12) que le deuxième plan.

8. Outil de formage avec un élément de moule selon l'une quelconque des revendications 1 à 7.

9. Machine de moulage par injection avec un outil de formage selon la revendication 8 ainsi qu'avec un dispositif pour chauffer et pour brasser un fluide de chauffage (dispositif de chauffage), ainsi qu'avec un dispositif pour refroidir et pour brasser un fluide de refroidissement (dispositif de refroidissement) .

10. Procédé de fabrication de pièces moulées en matière plastique avec une machine de moulage par injection selon la revendication 9.

11. Procédé selon la revendication 10, avec les étapes:
a) Echauffement de la cavité de moule de l'outil de formage à une température supérieure à la température de démoulage de la matière plastique à mettre en oeuvre, en ce que le fluide de chauffage est dirigé à travers les conduits de chauffage éloignés des cavités,
b) Démarrage de l'injection de matière plastique,
c) Achèvement de l'injection et simultanément démarrage du refroidissement, en ce que le fluide de refroidissement est dirigé à travers les conduits de refroidissement proches des cavités,
d) Achèvement du refroidissement avant d'atteindre ou à l'atteinte de la température de démoulage,
e) Prélèvement de la pièce en matière plastique et démarrage de l'échauffement,
alors que dans les étapes b) à d), le dispositif de chauffage continue à fonctionner ou est mis à l'arrêt.

12. Procédé selon la revendication 10, avec les étapes:
a) Echauffement de la cavité de moule de l'outil de formage à une température supérieure à la température de démoulage de la matière plastique à mettre en oeuvre, en ce que le fluide de chauffage est dirigé à travers les conduits de chauffage éloignés des cavités,
b) Démarrage de l'injection de matière plastique et abaissement de la température du dispositif de chauffage,
c) Achèvement de l'injection et simultanément démarrage du refroidissement avec le dispositif de refroidissement, en ce que le fluide de refroidissement est dirigé à travers les conduits de refroidissement proches des cavités,
d) Achèvement du refroidissement avant d'atteindre ou à l'atteinte de la température de démoulage et montée de la température du dispositif de chauffage,
e) Prélèvement de la pièce en matière plastique et démarrage de l'échauffement.

13. Procédé selon la revendication 11 ou 12, **caractérisé en ce qu'**à l'étape d), on aspire le fluide de refroidissement.

14. Procédé selon la revendication 10, avec les étapes:
a) Echauffement de la cavité de moule de l'outil de formage à une température supérieure à la température de démoulage de la matière plastique à mettre en oeuvre, en ce que le fluide de chauffage est dirigé à travers les conduits de chauffage éloignés des cavités,
b) Démarrage de l'injection de matière plastique,
c) Achèvement de l'injection et simultanément démarrage du refroidissement avec le dispositif de refroidissement, en ce que le fluide de refroidissement est dirigé à travers les conduits de refroidissement proches des cavités,
d) Achèvement du refroidissement avant d'atteindre ou à l'atteinte de la température de démoulage,
e) Prélèvement de la pièce en matière plastique et démarrage de l'échauffement,
le fluide de refroidissement étant aspiré à l'étape d).

15. Procédé selon la revendication 10, avec les étapes:
a) Echauffement de la cavité de moule de l'outil de formage à une température légèrement inférieure à la température de démoulage de la matière plastique à mettre en oeuvre, en ce que le fluide de chauffage est dirigé à travers les conduits de chauffage éloignés des cavités,
b) Démarrage de l'injection de matière plastique,
c) Achèvement de l'injection et simultanément démarrage du refroidissement avec le dispositif de refroidissement, en ce que le fluide de refroidissement est dirigé à une température légèrement inférieure à la température de démarrage à travers les conduits de refroidissement proches des cavités,
d) Achèvement du refroidissement avant d'atteindre ou à l'atteinte de la température de démoulage,
e) Prélèvement de la pièce en matière plastique et démarrage de l'échauffement.

16. Procédé selon la revendication 15, **caractérisé en ce qu'**on fait fonctionner le dispositif de chauffage et le dispositif de refroidissement à la même température.

17. Procédé selon la revendication 10, notamment pour des cycles très courts, avec les étapes :
a) Fonctionnement du dispositif de chauffage, en ce que le fluide de chauffage est dirigé à travers les conduits de chauffage éloignés des cavités et fonctionnement du dispositif de refroidissement, en ce que le fluide de refroidissement est dirigé à travers les conduits de refroidissement proches des cavités,
b) Démarrage de l'injection de matière plastique,
c) Achèvement de l'injection,
d) Laisser refroidir la pièce en matière plastique,
e) Prélèvement de la pièce en matière plastique.

18. Procédé selon l'une quelconque des revendications 10 à 17, **caractérisé en ce qu'**à l'étape a), les moitiés de l'outil de formage sont échauffées à différentes températures.

19. Procédé selon l'une quelconque des revendications 10 à 18, **caractérisé en ce qu'**à l'étape c), les moitiés de l'outil de formage sont refroidies à différentes températures.

20. Procédé selon l'une quelconque des revendications 10 à 19, **caractérisé en ce qu'**aux étapes a), b) et d), on fait fonctionner le dispositif de refroidissement à une température supérieure à celle de l'étape c).
